# EUROPÄISCHE PATENTSCHRIFT

(11) **EP 4 192 720 B1**
(45) Veröffentlichungstag und Bekanntmachung des Hinweises auf die Patenterteilung: **31.07.2024**
(21) Anmeldenummer: 21736284.7
(22) Anmeldetag: 23.06.2021
(51) Int. Cl.: B62D 7/15, B62D 6/00

(54) **VERFAHREN ZUM BETREIBEN EINER STEER-BY-WIRE-LENKUNG EINES KRAFTFAHRZEUGS SOWIE STEUERGERÄT, COMPUTERPROGRAMM UND STEER-BY-WIRE-LENKUNG**
METHOD FOR OPERATING A STEER-BY-WIRE STEERING SYSTEM OF A MOTOR VEHICLE, CONTROL DEVICE, COMPUTER PROGRAMME, AND STEER-BY-WIRE STEERING SYSTEM
PROCÉDÉ DE FONCTIONNEMENT D'UN SYSTÈME DE DIRECTION À COMMANDE ÉLECTRIQUE D'UN VÉHICULE MOTORISÉ, DISPOSITIF DE COMMANDE, PROGRAMME INFORMATIQUE, ET SYSTÈME DE DIRECTION À COMMANDE ÉLECTRIQUE

(30) Priorität: 06.08.2020 DE 102020209961
(43) Veröffentlichungstag der Anmeldung: 14.06.2023
(73) Patentinhaber: ZF Friedrichshafen AG, 88046 Friedrichshafen (DE)
(72) Erfinder: VOGT, Dominik, 88074 Meckenbeuren (DE); DASCH, Ingo, 82166 Gräfelfing (DE)
(74) Vertreter: ZF Friedrichshafen AG
(86) Internationale Anmeldenummer: PCT/EP2021/067163
(87) Internationale Veröffentlichungsnummer: WO 2022/028772

(56) Entgegenhaltungen:
- WO-A1-2019/229205
- DE-A1- 102017 219 881

## Beschreibung

Die Erfindung betrifft ein Verfahren zum Betreiben einer Steer-by-Wire-Lenkung, ein Steuergerät, ein Computerprogramm mit Programmcodemitteln sowie eine Steer-by-Wire-Lenkung nach den Obergriffen der unabhängigen Ansprüche.

Eine Steer-by-Wire-Lenkung wird in einem Kraftfahrzeug zum Lenken der Räder an einer oder mehreren Achsen eingesetzt. Wesentlich dabei ist, dass bei einer Steer-by-Wire-Lenkung eine mechanische Entkopplung der Lenkeingabe durch den Fahrer und der tatsächlichen Lenkbewegung vorliegt. Beispielsweise wird die Lenkbewegung am Lenkrad durch den Fahrer durch eine Sensorik aufgenommen und an ein Steuergerät weitergeleitet, welches die Daten auswertet. Es werden dann in Abhängigkeit von Parametern des Fahrzeugs sowie ggfs. weiteren vorherrschenden Umgebungsbedingungen Steuersignale an einen Aktuator der Steer-by-Wire-Lenkung weiterleitet, welche letztendlich die Lenkbewegung der Räder oder mit anderen Worten Änderungen der Radlenkwinkel ausführt.

Um den abgesicherten Betrieb oder mit anderen Worten einen für Leib und Leben der Fahrzeuginsassen und der Fahrzeugumgebung gefahrlosen Betrieb zu gewährleisten, werden Funktionen benötigt, die bestimmten Sicherheitsausführungen bzw. Sicherheitsstandards genügen. In der Automobilindustrie sind hierzu Anforderungen festgelegt, die in verschiedenen Stufen eingeteilt sind. Hierzu existieren sogenannte Automotive Safety Integrity Level, wobei die Level (=Stufen) sich an einer Gefährdungsanalyse und Risikoabschätzung orientieren. Es werden dazu potentielle Gefährdungen eines Systems analysiert und die möglichen Fehlfunktionen in spezifischen Fahrsituationen je nach eingeschätzter Gefährdung bzw. Anforderung in unterschiedlichen Sicherheitsanforderungsstufen von A-D klassifiziert. Dabei ist Level/Stufe A als niedrigste und D als höchste Einstufung zu betrachten (ASIL-A bis ASIL-D). Das Fahrwerk eines Fahrzeuges muss hohen bis höchsten Sicherheitsanforderungen genügen. Die Räder eines Kraftfahrzeuges sind an dessen Fahrwerk aufgehängt. Die zum Fahrwerk zählende Lenkung ist radführend ausgebildet. Bei Geradeausfahrt oder auch bei einer Kurvenfahrt müssen die Räder hinsichtlich ihres jeweiligen Radlenkwinkels geführt werden, so dass deren Radlenkwinkel sich aufgrund von Seitenkräften, welche auf die Räder wirken, nicht bzw. in geringen tolerierten Grenzen ändern - andernfalls wäre eine Kurvenfahrt bzw. die Beibehaltung des Kurvenradius nicht möglich. Dieses ist insbesondere deswegen anspruchsvoll, weil die Räder mit einfachen Worten gesagt permanent versuchen, den Radlenkwinkel zu ändern. Bemerkbar macht sich dieses beispielsweise, wenn in einer Kurvenfahrt das Lenkrad losgelassen wird. Dann versuchen die Räder aufgrund der konstruktiv bedingten Vorspur- bzw. des Nachlaufs an dem Fahrwerk eine Neutralstellung in Richtung Geradeausfahrt wieder einzunehmen. Der Radlenkwinkel beträgt bei einer Geradeausfahrt 0 Grad. Sind nun die Räder an zumindest einer Achse mittels einer Steer-by-Wire-Lenkung gelenkt, so muss diese Steer-by-Wire-Lenkung radführend ausgebildet sein. Je nach Fahrsituation muss die Steer-by-Wire-Lenkung in der Lage sein, eine langsame sanfte oder auch eine schnelle Lenkbewegung auch unter höchsten Seitenkräften durchzuführen. Beispielsweise bei schneller Überlandfahrt von z.B. 100 km/h reichen kleinste Lenkbewegungen bzw. Radlenkwinkeländerungen aus, um einen Richtungsverhalten des Fahrzeuges zu bewirken. Bei einem Parkiervorgang hingegen sind große Lenkwinkeländerungen erforderlich, wobei aufgrund der hohen Radaufstandskräfte und der geringen Raddrehbewegungen hohe Stellkräfte erforderlich sind. Ein fehlerhafte Lenkbewegung der Steer-by-wire-Lenkung ist für den normalen Fahrer, vor allem bei hohen Fahrzeuggeschwindigkeiten kaum zu beherrschen. Daher ist für Lenksysteme und somit auch für eine Steer-by-Wire-Lenkung die höchste Sicherheitseinstufung nach ASIL-D vorgeschrieben.

Üblicherweise wird bei Steer-by-Wire-Lenkungen das Stellsignal und die damit verbundene Lenkwinkeländerung auf einem Steuergerät der steer-by-wire-Lenkung berechnet. Absolut gesehen wird ein Gesamtsolllenkwinkel berechnet. Auf Grundlage z.B. des Lenkwinkels und der Fahrzeuggeschwindigkeit wird das berechnete Stellsignal an den Aktuator der Steer-by-Wire-Lenkung weitergeleitet, welcher die Lenkbewegung ausführt. Die steer-by-wire-Lenkung selbst überwacht dabei, ob eine maximaler Lenkwinkel nicht überschritten wird, so dass der Lenkwinkel begrenzt wird und es z.B. zu keinen Kollisionen mit Fahrwerksteilen oder Teilen der Karosserie kommen kann. Eine solche Funktion kann mit einer sogenannten Korridorfunktion bewerkstelligt werden. Soll die steer-by-wire-Lenkung mit weiteren Lenkfunktionen kombiniert werden, welche z.B. von Fahrerassistenzsystemen einfließen, so muss sichergestellt werden, dass außerhalb der steer-by-wire-Lenkung bzw. dessen Steuergerät generierte Lenkwinkeländerungen ggfs. an der Korridorfunktion vorbeigeführt werden. Zur Erfüllung von ASIL-D muss dabei unter allen Umständen ausgeschlossen werden, dass die steer-by-wire-Lenkung ein fehlerhaftes Signal zur Änderung des Lenkwinkels erhält.

In der WO 2019/229205 A1 wird ein Solllenkwinkel für eine Hinterachse dadurch bestimmt, dass in Abhängigkeit von Zuständen des Fahrzeugs und/oder der Außenwelt in dem das Fahrzeug fährt, ein Lenkwinkel der Hinterräder bestimmt wird. Es werden hierbei verschiedene Anforderungen bei Fahrten in unterschiedlichem Gelände (z.B. Fahrten im Sand, Wüste) und in Abhängigkeit eines vorgewählten Fahrmodus berücksichtigt.

Es ist eine Aufgabe der Erfindung, dass bei Fahrzeugen mit diversen Lenkfunktionalitäten der notwendige sichere Betrieb von Steer-by-Wire-Lenkungen ermöglicht wird.

Diese Aufgabe wird mit einem Verfahren ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Neben dem Verfahren gemäß Hauptanspruch werden zur Lösung des Weiteren ein Steuergerät sowie Computerprogramm mit Programmcodemitteln und eine Steer-by-Wire-Lenkung zur Lösung beansprucht.

Nach einem ersten Aspekt der Erfindung wird ein Verfahren zum Betreiben einer Steer-by-Wire-Lenkung eines Kraftfahrzeugs angegeben. Bei einem Fahrzeug wird von zumindest einer Lenkfunktion eine oder mehrere Lenkwinkeländerungen an zumindest einem Rad an zumindest einer Fahrzeugachse angefordert. Eine Arbitrierungseinheit erhält auf dem Signalweg, bspw. mittels eines Busses, z.B. CAN-Bus, Flexray oder dergleichen, eine Lenkwinkeländerung. Die Arbitrierungseinheit gewichtet in einem ersten Schritt die angeforderten Lenkwinkeländerungen, welche als Solllenkwinkel von der jeweiligen Lenkfunktion vorliegen. Diese Solllenkwinkel werden bei der Gewichtung priorisiert. Beispielsweise wird bei einer von dem Fahrer aktivierten Assistenzfunktion zum Parkieren, also zum Einparken des Fahrzeuges in eine vorhandene Lücke, ein Solllenkwinkel angefordert bzw. vorgegeben. Eine Korridorfunktion, welche eine weitere Lenkfunktion darstellt erlaubt bei niedrigen Geschwindigkeiten, bspw. unterhalb von 25 Kilometern/Stunde ein gegensinniges Lenken der Räder an der Vorder- und an der Hinterachse. Der maximale Lenkwinkel ist jedoch begrenzt, damit bspw. das Rad keinen Kontakt mit dem Fahrwerk oder dem Radgehäuse bekommt. Es ergibt sich aus dieser Funktion ein erster Sollwinkel. Aufgrund der aktivierten Assistenzfunktion zum Parkieren ist es anzunehmen, dass zum Einparken des Fahrzeugs hohe Lenkwinkel erforderlich sind, die von dem Aktuator der Steer-by-Wire-Lenkung eingestellt werden sollen. Es ergibt sich ein weiterer Solllenkwinkel.

Die Arbitriereinheit muss nun zum einen ein gegensinniges Lenken bewerten und erlauben, dabei unter Berücksichtigung des maximalen Stellwinkels einen maximalen Solllenkwinkel zulassen. Unter Berücksichtigung der Gewichtung priorisiert die Arbitrierungseinheit aus den vorliegenden Solllenkwinkeln einen Solllenkwinkel und bestimmt daraus anschließend einen Gesamtsollwinkel, welcher zur erfolgreichen Ausführungen des Parkiervorgangs eingestellt werden soll. Die Arbitrierungseinheit führt diese Aktion und die damit verbundene Berechnung des Gesamtsolllenkwinkels fortwährend und in Intervallen aus - in dem vorgenannten Beispiel bis der Parkiervorgang abgeschlossen ist und das Fahrzeug zum Stillstand kommt. Mit andern Worten bekommt die Arbitrierungseinheit fortwährend verschiedene Sollenkwinkel und gewichtet diese. Dabei findet ein ständiger Wechsel des jeweils priorisierten Solllenkwinkels statt, da diese Solllenkwinkelinformationen von unterschiedlichen Quellen (z.B. Korridorfunktion und Assistenzfunktion zum Parkieren) an die Steer-by-wire-Lenkung bzw. dessen Steuergerät und somit an die Arbitrierungseinheit geleitet werden.

Erfindungsgemäß ist es vorgesehen, dass fortwährend vor einer eigentlichen Einstellung des Gesamtsollwinkels durch den Aktuator der Steer-by-Wire-Lenkung eine Überprüfung durchgeführt wird, ob die folgende Bedingung erfüllt ist:
Gradient des Gesamtsollwinkels ist kleiner oder gleich dem Gradienten des Solllenkwinkels.

Der Vorgang ist so zu verstehen, dass während des Betriebs des Fahrzeugs bzw. der steer-by-wire-Lenkung fortwährend, also das Verfahren bzw. die Verfahrensschritte ständig ausgeführt werden. Dabei kann die Überprüfung oder weitere Schritte in gleichen oder auch unterschiedlichen Zeitabständen, auch Intervalle genannt, erfolgen.

Der Gradient des Gesamtsollwinkels und des Sollenkwinkels (Ableitung des Winkels nach der Zeit) ergibt dabei jeweils eine Lenkwinkelgeschwindigkeit.

Trotz sorgfältigster Auswahl der Bauteile für eine steer-by-wire-Lenkung wie eines Steuergeräts bzw. des Aktuators und sicherheitskritischer Auslegung der Signalpfade von Steuergeräten des Fahrzeugs über den Bus zum Steuergerät der Steer-by-Wire-Lenkung sowie sorgfältigster Programmierung des Steuergeräts kann es theoretisch zu einer fehlerbehafteten Berechnung des Gesamtsolllenkwinkels kommen. Diese geringe Möglichkeit einer fehlerbehafteten Änderung des errechneten Gesamtsollwinkels soll vermieden werden, so dass es zu keiner Gefahrensituation kommen kann. Wird also die oben genannte Bedingung nicht erfüllt, d. h. der Gradient des Gesamtsollwinkels ist größer als der von der Arbitrierungseinheit zuvor bestimmte Gradient des Solllenkwinkels aus den einzelnen Lenkfunktionen, so wird als Ergebnis ein Fehler gesetzt. In diesem Fehlerfall kann beispielweise die Lenkbewegung des Aktuators der Steer-by-Wire-Lenkung temporär eingefroren werden oder der Aktuator fährt beispielsweise die Räder in einen Radlenkwinkel von 0 Grad, was der Geradeausfahrt entspricht. In jedem Fall werden Situationen herbeigeführt, die insbesondere auch ein ungeübter Fahrer sicher beherrschen kann. Mit anderen Worten wird bei einem Fehler ein sicherer Zustand der Steer-by-Wire-Lenkung angefahren. Es sei an dieser Stelle nochmals die eingangs genannte hohe Sicherheitseinstufung für Fahrzeuglenkungen nach ASIL erwähnt, die eine solche Überprüfung sinnvoll bzw. erforderlich macht. Die hier als Lenkfunktion bezeichneten Funktionen fordern zumindest einen Solllenkwinkel an, auch wenn z.B. eine Korridorfunktion nicht unmittelbar am eigentlichen Lenken beteiligt ist.

Bevorzug erfolgt die Anforderung der Lenkwinkeländerung in Abhängigkeit von einer Fahrsituation des Kraftfahrzeugs. Eine Korridorfunktion erlaubt bspw. einen maximalen Stellwinkel bei niedriger Geschwindigkeit von z.B. kleiner oder gleich 25km/h. In diesem Bereich erlaubt diese auch ein gegensinniges Lenken. Des Weiteren kann in diesem Bereich ebenfalls die Assistenzfunktion zum Parkieren aktiviert werden. Wird die Fahrsituation betrachtet kann somit die erfindungsgemäße Überprüfung noch gezielter ausgeführt werden.

Bevorzugt wird vor der Überprüfung zu den Gradienten der Solllenkwinkel ein Sicherheitsfaktor aufaddiert. Der Betrag des Sicherheitsfaktors ist in Abhängigkeit von der Fahrzeuggeschwindigkeit variabel ausgelegt und kann in einer oder mehreren Kennlinien in der steer-by-wire-Lenkung bzw. dessen Steuergerät abgelegt bzw. dort gespeichert sein. Bevorzugt wird der Betrag des Sicherheitsfaktors mit zunehmender Fahrzeuggeschwindigkeit kleiner. Es ist offensichtlich, dass selbst kleine Lenkbewegungen von deutlich unter einem Grad bei hoher Fahrgeschwindigkeit sehr viel größere Auswirkungen haben als bei einer niedrigen Fahrgeschwindigkeit, bspw. im Schritttempobereich während des Parkiervorgangs. Mit anderen Worten sind die negativen Auswirkungen eines fehlberechneten Gesamtsollwinkels bei einer hohen Geschwindigkeit deutlich kritischer als bei einer sehr niedrigen Geschwindigkeit. Der Sicherheitsfaktor ist ebenfalls eine Winkelgeschwindigkeit, die auch die Stellgeschwindigkeit des Aktuators der steer-by-wire-Lenkung berücksichtigt.

In einer bevorzugten Ausführungsform wird die Überprüfung in Intervallen durchgeführt. Hinreichende Ergebnisse lassen sich bei Intervallen von 1 bis 20 Millisekunden, vorzugsweise bei einem Intervall von 4 Millisekunden durchführen. Jede Überprüfung der Gradienten ist dabei eine zeitlich feste Gegenüberstellung der Gradienten und somit keine unaufgeforderte Überprüfung. Es lassen sich somit gezielt und in Abhängigkeit von der Fahrsituation Überprüfungen durchführen.

In einer weiteren bevorzugten Ausführungsform nimmt die Arbitriereinheit zusätzlich eine Überblendung von einem ersten Solllenkwinkel auf zumindest einen weiteren Solllenkwinkel, vorzugsweise in Abhängigkeit von der Fahrsituation des Kraftfahrzeugs vor. Die Überblendung unter Berücksichtigung der Sollenkwinkel bei der Berechnung des Gesamtsolllenkwinkels bedeutet eine allmähliche Änderung. Es sollen damit Sprünge vermieden werden, so dass es zu keinen schlagartigen Lenkbewegungen kommen kann. Dieses könnte der Fall sein, wenn der Unterschied zwischen den Solllenkwinkeln einer ersten und einer weiteren Lenkfunktion, bspw. Automatisiertes Fahren mit Assistenzsystem, Fahrerlenkwinkel, so groß wäre, dass ohne Überblendung eine starke und schlagartige Lenkwinkeländerung erfolgen würde. Es ist offensichtlich, dass auch hier die Fahrzeuggeschwindigkeit im Sinne der Fahrsituation eine Rolle spielt. Eine allmähliche Änderung des Radlenkwinkels bei einem Parkiervorgang kann aufgrund der niedrigen Fahrzeuggeschwindigkeit langsamer erfolgen als bspw. eine geringe Radlenkwinkeländerung während eines Überholvorganges mit Spurwechsel des Fahrzeugs durch den Fahrer. Eine allmähliche Änderung bedeutet jedoch nicht, dass die Änderung von dem Ist- auf den Solllenkwinkel stets langsam erfolgen muss. Die allmähliche Änderung wird in vorteilhafter Weise in Abhängigkeit von Parametern wie der Fahrzeuggeschwindigkeit und der jeweils beabsichtigten Lenkfunktion durchgeführt. Auch hier greift die Arbitrierungseinheit in ähnlicher Weise ein, wie dieses auch bei der Überprüfung der Gradienten des Gesamtsollwinkels im Vergleich zu dem Gradienten des Solllenkwinkels der Fall ist. Mit anderen Worten wird durch die Arbitrierungseinheit neben der Änderung des zu stellenden Lenkwinkels ebenfalls die Überblendung durchgeführt und kontinuierlich überprüft.

Zur Ermittlung der Fahrsituation des Kraftfahrzeugs wird bevorzugt zumindest einer der folgend genannten Parameter eingelesen:
- Fahrmodus
- Lenkradwinkel
- Lenkradwinkelgeschwindigkeit
- Lenkradwinkelbeschleunigung
- Fahrzeuggeschwindigkeit
- Gierwinkelgeschwindigkeit
- Querbeschleunigung
- Längsbeschleunigung
- Radlenkwinkel zumindest eines Rades an zu lenkender Achse

Der Parameter Fahrmodus berücksichtigt, in welchem Zustand sich das Fahrzeug gerade befindet. So kann ein manueller Fahrmodus vorherrschen, bei dem sämtliche Lenkeingaben vom Fahrer bestimmt werden. Der Fahrer kann beispielsweise einen Fahrmodus zum Parkieren aktivieren (Assistenzsystem Parkieren), mittels dessen ein Fahrzeug selbsttätig oder mit anderen Worten autonom in einer Parklücke fährt. Ein solches Assistenzsystem kann beispielsweise nur bis 10 km/h aktiviert werden. Ebenso kann der Fahrer ein Assistenzsystem für vollautomatisches Fahren aktivieren, mittels dessen das Fahrzeug soweit automatisiert fährt, wie es dem Fahrzeug möglich ist oder wie der Fahrer dieses auswählt. Bei der Auswahl des jeweiligen Fahrmodus durch den Fahrer fordert eine Schnittstelle die Änderung des Fahrmodus an. Fahrzeugseitig wird dann geprüft, ob der Modus gewechselt werden kann.

Der Lenkradwinkel wird am Lenkrad bzw. der Lenkhandhabe bzw. der Lenksäule des Fahrzeugs sensorisch erfasst. Der Drehwinkel gibt Auskunft über den Fahrerwunsch, also dessen Lenkabsicht. Aus dem erfassten Lenkradwinkel lässt sich auf einfache Weise mittels einfacher oder zweifacher Ableitung die Lenkradwinkelgeschwindigkeit und auch die Lenkradwinkelbeschleunigung errechnen. Durch diese beiden Parameter kann detaillierter auf die Lenkabsicht geschlossen werden, zum Beispiel ein schlagartiges Lenken zum Ausweichen etc. Die Gierwinkelgeschwindigkeit gibt Auskunft über die Drehrate des Fahrzeugs um dessen Hochachse. Diese wird zum Beispiel mittels eines Drehratensensors in der elektronischen Stabilitätskontrolle (ESC) erfasst. Zur Analyse der Fahrsituation sind ebenfalls die Parameter Querbeschleunigung und Längsbeschleunigung von großem Vorteil. Die Längsbeschleunigung gibt Auskunft darüber, welche Beschleunigung auf das Fahrzeug beispielsweise beim Bremsen (negative Beschleunigung) oder beim Beschleunigen durch Gas geben (positive Beschleunigung in Fahrtrichtung) wirkt. Querbeschleunigung tritt bei einem Fahrzeug zum Beispiel bei Fahrtrichtungswechsel oder nach dem Einleiten einer Kurve bei Kurvenfahrt auf. Durch letzteren Parameter kann beispielsweise auch auf das Fahrwerk bzw. das Fahrzeug wirkende Seitenkräfte und Seitenführungskräfte geschlossen werden. In Verbindung mit Informationen zu Reibwerten kann hierdurch auf Schräglaufwinkel geschlossen werden oder gegebenenfalls Untersteuern oder Übersteuern berücksichtigt werden.

Bei der zu lenkenden Achse handelt es sich um jene Achse(n), welche durch die Steer-by-Wire-Lenkung gelenkt wird bzw. werden. Vor einer Änderung eines Radlenkwinkels ist es daher vorteilhaft zu wissen, welches der aktuelle Radlenkwinkel des jeweils gelenkten Rades an der zu lenkenden Achse ist. Die Radlenkwinkel der Räder eines Kraftfahrzeugs geben zum Beispiel Auskunft darüber, ob ein Fahrzeug geradeaus fährt oder sich in einer Kurvenfahrt befindet. Mit anderen Worten kann durch die Stellung der Räder abgelesen aus den Radlenkwinkeln die Trajektorie des Fahrzeugs bestimmt werden.

Die Liste der aufgeführten Parameter ist nicht abschließend angegeben. Weitere Parameter, bspw. die Ermittlung des Straßenzustands mittels geeigneter, insbesondere optischer Sensoren oder Cloud-basierter Daten oder Daten aus einem Navigationsgerät sind ebenso denkbar wie weitere hier nicht genannte Parameter, welche vorteilhaft für die Bestimmung der Fahrsituation eingesetzt werden können.

Bevorzugt werden zur Ermittlung der Fahrsituation des Kraftfahrzeugs Signale von zumindest einem, insbesondere nicht zur Steer-by-Wire-Lenkung gehörenden Steuergerät von der Arbitrierungseinheit eingelesen und berücksichtigt. Dabei werden die Signale in Intervallen, insbesondere in einem Bereich von 5-40 Millisekunden, vorzugsweise 10 Millisekunden eingelesen. Eine Steer-by-Wire-Lenkung weist demnach bevorzugt ein eigenes Steuergerät auf. Die vorgenannten Lenkfunktionen können bspw. auf einem oder mehreren Steuergeräten abgebildet sein. Diese Steuergeräte können die Solllenkwinkel mittels eines im Fahrzeug vorhandenen Bussystems, wie z.B. den CAN-Bus oder des Systems Flexray an die Arbitrierungseinheit weiterleiten. Die Arbitrierungseinheit selbst kann bspw. auf dem Steuergerät der Steer-by-Wire-Lenkung ausgeführt werden. In einer bevorzugten Ausführungsform wird insbesondere in der Arbitrierungseinheit eine Entprellung der ermittelten Werte aus der Überprüfung des Gradientenvergleichs vorgenommen, bevor auf einen tatsächlichen Fehler bei der Berechnung des Gesamtsolllenkwinkels geschlossen wird. Um verlässliche Werte zu erhalten und etwaige mechanische und/oder elektrische Störungen auszuschließen, wird das Ergebnis des Gradientenvergleichs mehrfach verglichen. Besteht der Fehler über einen gewissen Zeitraum, wird ein Fehler gesetzt und die oben genannten Maßnahmen eingeleitet. Wenn das Intervall zur Überprüfung des Gradientenvergleichs in Intervallen von 4 ms durchgeführt wird und beispielsweise 5 Überprüfungen miteinander auf Übereinstimmung verglichen werden, so kann die Verifizierung eines zu hohen Gesamtsolllenkwinkels in einer sehr kurzen Zeit von 20 ms durchgeführt werden. Die hohen Sicherheitsanforderungen an eine steer-by-wire-Lenkung als Lenksysteme werden somit eingehalten. Damit wird vorteilhaft eine weitere Fehlerquelle eliminiert.

Bevorzugt ist die zumindest eine Lenkfunktion einer der nachfolgend beispielhaft genannten Funktionen. Die genannten Lenkfunktionen sind aus einer nicht abschließend genannten Liste. Weitere ähnliche Funktionen sind nutzbar. Bevorzugt sind diese Funktionen in einem Kraftfahrzeug vorhanden und werden auf einem oder mehreren Steuergeräten ausgeführt, jedoch werden diese nicht auf dem Steuergerät der steer-by-wire-Lenkung ausgeführt, gleichwohl diese von diesem verarbeitet werden.
- Korridorfunktion
- Parkierfunktion
- Rückfallfunktion
- Fahrerassistenzfunktion
- ESC

Eine erste Korridorfunktion für niedrige Geschwindigkeiten überwacht bspw. die maximalen Stellwinkel der jeweiligen Räder der Fahrzeugachsen. Es kann damit eine Kollision der Räder mit Teilen der Karosserie oder des Fahrwerks verhindert werden, wenn bei langsamer Fahrt und erlaubtem gegensinnigen Lenken große Radlenkwinkeländerungen gestellt werden. Eine andere Korridorfunktion für hohe Geschwindigkeiten kann eine Begrenzung der Radlenkwinkel in Abhängigkeit von der Geschwindigkeit auf wenige Minuten oder geringere Änderungen bedeuten. Die Korridorfunktion überwacht in diesem Fall bei hohen Geschwindigkeiten ebenfalls, dass bspw. in Abhängigkeit von der Fahrsituation gleichsinnig an der Vorder- und der Hinterachse des Kraftfahrzeugs gelenkt wird, um die Fahrstabilität und die Agilität des Fahrzeugs z.B. bei Überholvorgängen zu erhöhen.

Bei einer Parkierfunktion handelt es sich um eine vom Fahrer wählbaren Assistenten, so dass bspw. nach dessen Aktivierung das Fahrzeug im Sinne eines Fahrerassistenzsystems selbsttätig das Fahrzeug in eine Parklücke einparkt. Diese Funktion kann bspw. mit der Korridorfunktion bei langsamen Geschwindigkeiten in Wechselwirkung stehen.

Eine Rückfallfunktion kann bspw. bei erkannten Fehlern wie fehlenden Signalen oder Sollvorgaben (z.B. Winkeländerungen) eingreifen. Beispielsweise werden in Abhängigkeit von der Geschwindigkeit des Fahrzeugs von z.B. unterhalb von 50 km/h ESC-Signale erwartet. Bleiben diese aus, so kann die Rückfallfunktion Signale ersetzen, so dass eine Weiterfahrt in Grenzen möglich ist. Bei dem ESC handelt es sich um die Funktion des elektronischen Stabilitätsprogramms. Dabei können Lenk- bzw. Bremseingriffe auf einzelne Räder ausgeführt werden, um die Trajektorie des Fahrzeugs einzuhalten. Diese Funktion wird bspw. erst ab einer Geschwindigkeit größer 25 km/h aktiviert.

Bei einer Fahrerassistenzfunktion handelt es sich um einen übergeordneten Begriff. Gemeint sind an dieser Stelle Fahrerassistenzfunktionen, die dem automatisierten Fahren im Sinne des autonomen Fahrens in verschiedenen Stufen dienen. Der Fahrer kann das autonome Fahren aktivieren, welches je zulässiger Stufe eine teil- bis vollautomatisierte Fahrt erlaubt.

Die vorgenannten unterschiedlichen Funktionen können einzeln oder gleichzeitig aktiv sein und somit zeitgleich jeweils für sich unterschiedliche Änderungen des Solllenkwinkels anfordern. In Abhängigkeit der Fahrsituation werden diese von der Arbitrierungseinheit gewichtet und es wird nach einer Priorisierung ein Gesamtsolllenkwinkel bestimmt.

Nach einem weiteren Aspekt der Erfindung wird ein Steuergerät eingesetzt, welches zum Ausführen eines Verfahrens nach einem der vorher gehenden genannten Ausführungsformen vorgesehen ist. Das Steuergerät kann beispielsweise derart ausgebildet sein, dass dieses digital arbeitet und das Verfahren mittels eines Computerprogramms mit Programmmittel auf diesem ausgeführt wird. Nach einem weiteren Aspekt betrifft die Erfindung ein Computerprogramm mit Programmcodemitteln, um das Verfahren nach einem der vorgenannten Ausführungen auszuführen, wenn das Programm auf einem Computer gespeichert ist und, insbesondere auf dem vorgenannten Steuergerät, ausgeführt wird.

Schließlich betrifft die Erfindung eine Steer-by-Wire-Lenkung mit einem Steuergerät, wie zuvor genannt. In bevorzugter Ausführung ist die Steer-by-Wire-Lenkung als Hinterachslenkung eines Kraftfahrzeugs ausgebildet. So kann bei einem Fahrzeug an der Vorderachse eine mechanisch oder elektrisch unterstützte mechanische Lenkung vorhanden sein, welche von dem Fahrer Lenksignale mittels einer Lenkhandhabe, wie z.B. einem Lenkrad erhält. Die Hinterachslenkung wäre in diesem Fall eine von der Vorderachslenkung mechanisch entkoppelte Zusatzlenkung, welche bei gegensinnigem Lenken einen klaren Vorteil durch einen geringeren Wendekreis und stark verbesserte Parkiermöglichkeiten bietet. Zur Steigerung der Agilität und der Fahrsicherheit durch Erhöhung der Fahrstabilität mittels gleichsinnigem Lenken bei hohen Geschwindigkeiten von z.B. oberhalb von 50km/h kann die Hinterachslenkung in vorteilhafter Weise eingesetzt werden. Es ist jedoch nicht ausgeschlossen, dass sämtliche Achsen eines Fahrzeuges mit einer steer-by-wire-Lenkung ausgestattet sind. So kann auch die Vorderachse als steer-by-wire-Lenkung mittels Stellsignalen eines Steuergerätes betätigt werden. Durch die nicht notwendigen mechanische Bauteil (Lenksäule zum Lenkgetriebe der Vorderachse) kann in vorteilhafter Weise Gewicht und Kosten reduziert werden.

Die Erfindung wird nachfolgend anhand bevorzugter Ausführungsformen unter Bezugnahme auf die Zeichnung beschrieben. In der Zeichnung zeigen:
- Fig. 1: ein Fahrzeug mit einer steer-by-wire-Lenkung
- Fig. 2: ein Flussdiagramm eines Verfahrens gem. Stand der Technik
- Fig. 3: ein Flussdiagramm eines erfindungsgemäßen Verfahrens

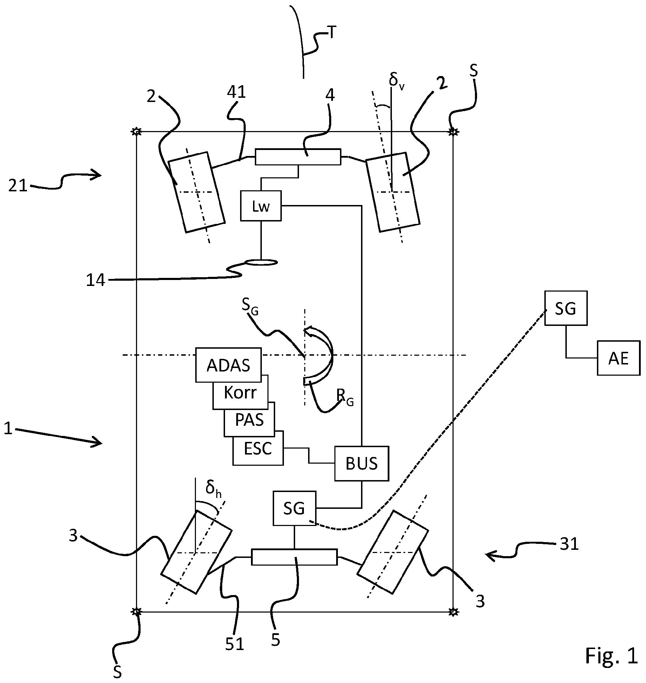

Figur 1 zeigt schematisch ein Fahrzeug 1 mit einer lenkbaren Vorderachse 21 und einer lenkbaren Hinterachse 31. Zum Lenken der Räder 2 an der Vorderachse 21 ist eine Lenkung 4 vorgesehen, welche die Räder 2 über ein Lenkgestänge 41 den Radlenkwinkel vorne δᵥ einstellen bzw. ändern kann. Dieser Winkel δᵥ ist am rechten Rad 2 in der Figur 1 beispielhaft eingezeichnet. An der Hinterachse 31 sorgt eine steer-by-wire-Lenkung 5 über ein Lenkgestänge 51 für das Einstellen bzw. Ändern der Radlenkwinkel δₕ an den hinteren Rädern 3. In der gezeigten Ausführung sind die Räder an der Vorderachslenkung 4 und der Hinterachslenkung 5 gegensinnig gelenkt, so dass sich bei niedriger Geschwindigkeit von z.B. kleiner 50 km/h vorteilhaft ein reduzierter Wendekreis und eine verbesserte Parkiermöglichkeit ergibt gegenüber Fahrzeugen, welche lediglich eine gelenkte Achse aufweisen. Auch lassen sich mit zwei gelenkten Achsen vorteilhaft verbessert automatisierte Fahrten ausführen. Die Einstellung des Lenkwinkels an der Vorderachse 21 erfolgt durch den Fahrer hier grundsätzlich über ein Lenkrad 14, wobei der Lenkwinkel Lw über eine Sensoreinheit erfasst wird und über eine Signalleitung der Lenkwinkel an die steer-by-wire-Lenkung 4 geleitet wird, welche diesen einstellt. Die Sensoreinheit zur Übermittlung des Lenkwinkels Lw ist über ein Bussystem mit dem Steuergerät der steer-by-wire-Lenkung 5 elektrisch verbunden. Das Bussystem ist beispielsweise ein CAN-Bus oder auch ein Flexray Bus. Über das Bussystem sind Lenkfunktionen für ein Fahrerassistenzsystem autonomes Fahren ADAS, Korrekturfunktionen zur Begrenzung des maximalen Lenkwinkels Korr, ein Parkierassistent PAS zum automatisierten Parkieren und ein elektronische Stabilitätskontrolle ESC elektrisch mit dem Steuergerät SG der steer-by-wire-Lenkung der Hinterachse verbunden. Dieses Steuergerät SG ist mit einer Arbitrierungseinheit AE versehen, welche eine Überprüfung der Gradienten aus den Solllenkwinkeln dSLw_i/dt mit dem Gradienten dG_SLw/dt des von der Arbitrierungseinheit bestimmten Gesamtsolllenkwinkels G_SLw kontinuierlich durchführt. In der Figur 1 ist hierzu das Steuergerät mit der strichlierten Line herausgezogen dargestellt, um zu zeigen, dass die Arbitrierungseinheit zum Steuergerät SG der hinteren steer-by-wire-Lenkung 5 gehört.

Eine in dem Schwerpunkt S_{G} gemessene Gierrate R_{G} wird über einen geeigneten Sensor (Drehratensensor) im Schwerpunkt des Fahrzeugs 1 ermittelt und von der elektronischen Stabilitätskontrolle ESC erfasst bzw. ausgewertet. Am äußeren Enden des Fahrzeugs 1 sind Sensoren S angeordnet, die einer Sensorik zugeordnet sind und welche zur Fahrzeugumfelderkennung dienen. Es kann sich hierbei um Temperatursensoren, um optische Sensoren, die beispielsweise eine Kamera umfassen, oder auch um LiDAR oder Radar handeln, die zur Temperatur-, Abstands- oder auch optischen Erfassung, beispielsweise der Fahrbahn, geeignet sind. Es können somit Wetterbedingungen, wie Feuchtigkeit oder die Temperatur auf der Fahrbahn etc. erfasst und dem Steuergerät SG zugeführt werden. Das Fahrzeug folgt einer Trajektorie T, die in der Figur ebenfalls am vorderen Ende des Fahrzeugs in dessen Fahrtrichtung schematisch dargestellt ist.

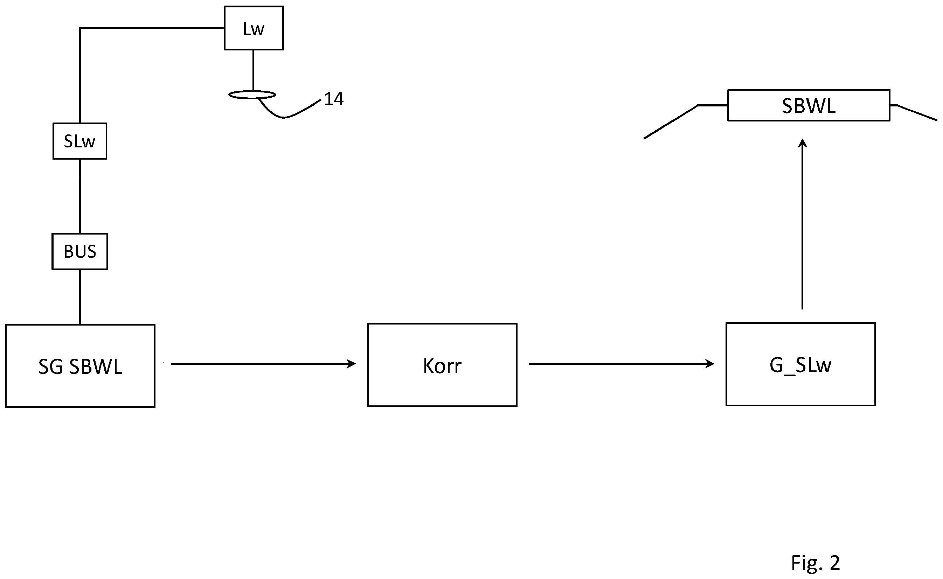

Figur 2 zeigt den Signalweg von der Lenkhandhabe bzw. dem Lenkrad 14 bis zur tatsächlichen Änderung des Lenkwinkels bzw. der Einstellung des Gesamtsolllenkwinkels G_SLw durch die steer-by-wire-Lenkung gemäß dem Stand der Technik. Aufgrund der Lenkbewegung durch den Fahrer am Lenkrad 14 wird ein Lenkwinkel Lw durch die sensorische Einheit erfasst. Auf dem Signalwege wird der Solllenkwinkel SLw über ein Fahrzeugbussystem wie dem CAN-Bus an ein Steuergerät SG SBWL der steer-by-wire-Lenkung weitergeleitet. Das Steuergerät SG SBWL der steer-by-wire-Lenkung SBWL berücksichtigt die auf diesem laufende Korridorfunktion Korr, sodass ein maximaler Lenkwinkel nicht überschritten wird. Es wird somit u.a. verhindert werden, dass das gelenkte Rad mit Teilen des Fahrwerks oder der Karosserie kollidiert. Das Steuergerät SG SBWL bestimmt dann den Gesamtsolllenkwinkel G_SLw und sendet diesen an die steer-by-wire-Lenkung SBWL, welches mittels des darin verbauten Aktuators die Änderung des Radlenkwinkels durchführt. Die beschriebene Anordnung bzw. das damit ausführbare Verfahren erlaubt nicht, dass weitere Lenkfunktionen einfließen können.

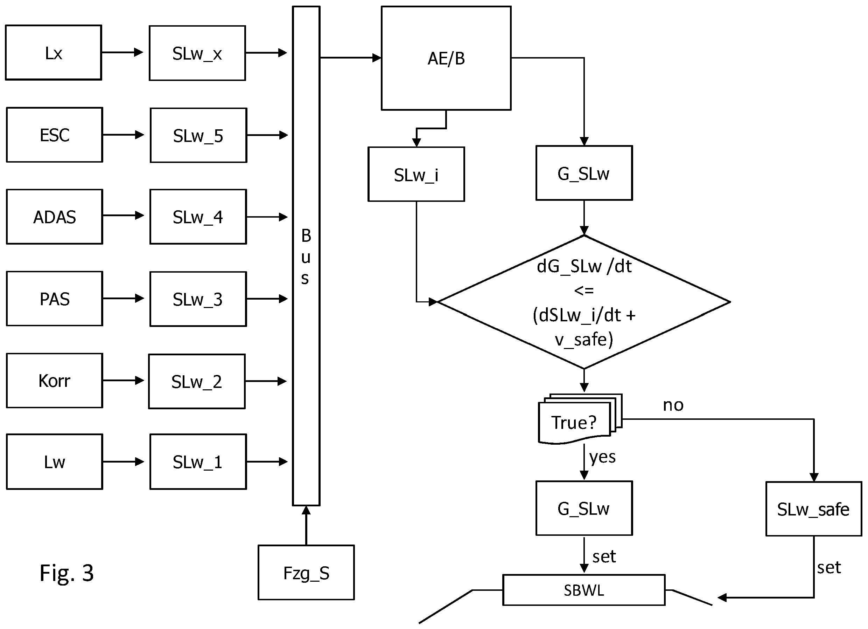

Figur 3 zeigt in einem Flussdiagramm schematisch eine Anordnung bzw. ein Verfahren gemäß der Erfindung. Etwa mittig dargestellt ist ein Bussystem im Fahrzeug, welcher ein CAN-Bus oder auch ein Flexray o. ä. zur Signalweiterleitung sein kann. Auf der linken Seite des Busses sind unterschiedliche Lenkfunktionen angegeben. Die zuvor zu Figur 1 bereits beschriebenen Funktionen Fahrerlenkwinkel Lw, Korridorfunktion Korr, Parkierassistent PAS, Fahrerassistenzsystem für autonomes Fahren ADAS und die elektronische Stabilitätskontrolle ESC fordern bei Bedarf jeweils einen Solllenkwinkel SLw_1 bis SLw_5 an und senden diesen an den Bus. Beispielhaft ist die weitere Lenkfunktion Lx angegeben, welche einen Solllenkwinkel SLw_x anfordert und stellvertretend für weitere hier nicht genannte Lenkfunktionen und die durch diese angeforderten Solllenkwinkel steht. Mit der Bezeichnung Fzg_S ist dargestellt, dass die Fahrsituationen ebenfalls als Signal in den Bus einfließt und aus diesem von der Arbitrierungseinheit AE eingelesen werden kann. Sämtliche Solllenkwinkel SLw_1 bis SLw_x werden als separate Signale von der Arbitrierungseinheit AE, welche eine Überblendfunktion B beinhaltet, eingelesen. Die Arbitrierungseinheit AE gewichtet die einzelnen Solllenkwinkel (SLw_1 bis SLw_x) und priorisiert einen Solllenkwinkel SLw_i. Mit anderen Worten entscheidet sich die Arbitrierungseinheit für eine Quelle, welche einer der vorgenannten Lenkfunktion entspricht. Es ist auch möglich, dass zumindest temporär die Informationen von zwei Quellen miteinander gemischt werden. Letztlich bestimmt jedoch die Arbitrierungseinheit AE unter Berücksichtigung der aktuellen Fahrsituation Fzg_S einen Solllenkwinkel SLw_i und bestimmt daraus einen Gesamtsolllenkwinkel G_SLw, welcher fortwährend errechnet wird.

Um sprunghafte Lenkbewegungen zu vermeiden, kann die Arbitrierungseinheit mittels der ihr zugeordneten Überblendfunktion allmählich von einem ersten bestimmten Solllenkwinkel auf einen anschließend bestimmten Solllenkwinkel überblenden. Dieses geschieht ebenfalls kontinuierlich.

In einem weiteren Schritt wird kontinuierlich in Intervallen von 4 ms eine Überprüfung durchgeführt, ob der Gradient des jeweiligen Gesamtsolllenkwinkels G_SLw kleiner oder gleich dem Gradienten des bestimmten Solllenkwinkels SLw_i plus einem jeweils aufaddierten Sicherheitsfaktor v_safe ist. Das Ergebnis dieser Überprüfung wird jeweils gespeichert und es wird mit dem nächsten errechneten Wert geprüft, ob dasselbe Ergebnis mehrfach auftritt. Trifft die Bedingung beispielsweise fünfmal hintereinander zu (True? = yes), so wird an die steer-by-wire-Lenkung der Gesamtsolllenkwinkel G_SLw übermittelt (set). Der Aktuator der steer-by-wire-Lenkung stellt dann diesen Gesamtsolllenkwinkel G_SLw ein. Falls die Überprüfung mehrfach, z.B. fünfmal hintereinander innerhalb von 20ms ergibt, dass die Bedingung nicht erfüllt ist (True? = no), so wird die steer-by-wire-Lenkung in einen Fehlermodus bzw. Sicherheitsmodus SLw_safe versetzt (set). In diesem Fall wird die steer-by-wire-Lenkung in Abhängigkeit der Fahrsituation den aktuellen Lenkwinkel einfrieren oder in Abhängigkeit von der Fahrsituationen allmählich einen Lenkwinkel von 0° anfahren, welcher der Geradeausfahrt entspricht. Es ist somit sichergestellt, dass sich bei Auftreten eines Fehlers bei der Berechnung des Gesamtsolllenkwinkels G_SLw keine von einem normalen Fahrer unbeherrschbare Situation ergibt. In vorteilhafter Weise ergibt sich somit eine steer-by-wire-Lenkung bzw. ein Verfahren zum Betreiben einer steer-by-wire-Lenkung, welche den hohen Sicherheitsanforderungen nach ASIL entspricht.

### Bezugszeichen

- 1.: Fahrzeug
- 2.: Vorderrad
- 3.: Hinterrad
- 4.: Vorderachslenkung
- 5.: Hinterachslenkung
- 14.: Lenkwinkel Fahrer
- 21.: Vorderachse
- 31.: Hinterachse
- 41.: Lenkgestänge
- 51.: Lenkgestänge

- AE: Arbitrierungseinheit
- ADAS: Fahrerassistenzsystem autonomes Fahren
- B: Überblendfunktion
- BUS: Bussystem (CAN, Flexray)
- ESC: Elektronische Stabilitäts Kontrolle
- Korr: Korridorfunktion
- PAS: Parkierassistent
- R_{G}: Gierrate
- SG: Steuergerät
- S_{G}: Schwerpunkt
- S: Sensorik
- T: Trajektorie
- δᵥ: Radlenkwinkel vorne
- δₕ: Radlenkwinkel hinten

- Fzg_S: Fahrsituation
- Lw: Lenkwinkel Fahrer
- Lx: weitere Lenkfunktion
- SLw(_1 bis _5): Solllenkwinkel
- SLw_x: weitere Solllenkwinkel

- SLw_i: Sollenkwinkel (bestimm durch AE)
- SG SBWL: Steuergerät Steer-by-wire-Lenkung
- G_SLw: Gesamtsolllenkwinkel
- SBWL: steer-by-wire-Lenkung
- dG_SLw/dt: Gradient Gesamtsolllenkwinkel
- dSLw_i/dt: Gradient Solllenkwinkel
- SLw_safe: Sicherheitsmodus steer-by-wire-Lenkung
- v_safe: Sicherheitsfaktor

## Patentansprüche

1. Verfahren zum Betreiben einer steer-by-wire-Lenkung eines Kraftfahrzeugs, wobei zumindest eine Lenkfunktion eine oder mehrere Lenkwinkeländerungen als Solllenkwinkel an zumindest einer Fahrzeugsachse anfordert, wobei eine Arbitrierungseinheit (AE) die Lenkwinkeländerungen als Solllenkwinkel (SLw_i) gewichtet und unter Berücksichtigung zumindest eines Solllenkwinkels (SLw_i) ein Gesamtsolllenkwinkel (G_SLw) bestimmt wird, **dadurch gekennzeichnet, dass** fortwährend vor einer Einstellung des Gesamtsolllenkwinkels (G_SLw) durch einen Aktuator der steer-by-wire-Lenkung eine Überprüfung durchgeführt wird, ob folgende Bedingung erfüllt ist:
Gradient des Gesamtsolllenkwinkels (G_SLw) ist kleiner oder gleich dem Gradienten des zumindest einen Solllenkwinkels (SLw_i).

2. Verfahren nach Anspruch 1, **dadurch gekennzeichnet, dass** die Anforderung der Lenkwinkeländerung in Abhängigkeit von einer Fahrsituation (Fzg_S) des Kraftfahrzeugs erfolgt.

3. Verfahren nach Anspruch 1 oder 2, **dadurch gekennzeichnet, dass** vor der Überprüfung jeweils zu den Gradienten der Solllenkwinkel (SLw_i) ein Sicherheitsfaktor (v_safe) aufaddiert wird, dessen Betrag in Abhängigkeit von der Fahrzeuggeschwindigkeit variabel ist, insbesondere dessen Betrag mit zunehmender Fahrzeuggeschwindigkeit kleiner wird.

4. Verfahren nach Anspruch 1, 2 oder 3, **dadurch gekennzeichnet, dass** die Überprüfung in Intervallen, insbesondere in Intervallen von 1-20ms, vorzugsweise alle 4ms durchgeführt wird.

5. Verfahren nach einem der vorhergehenden Ansprüche, **dadurch gekennzeichnet, dass** die Arbitriereinheit (AE) bei der Bestimmung des Gesamtsolllenkwinkels (G_SLw) eine Überblendung (B) unter Berücksichtigung eines ersten Solllenkwinkels (S_Lw1) und zumindest eines weiteren Solllenkwinkels (S_Lw2), vorzugsweise in Abhängigkeit von der Fahrsituation (Fzg_S) des Kraftfahrzeugs, vornimmt.

6. Verfahren nach einem der vorhergehenden Ansprüche, **dadurch gekennzeichnet, dass** zur Ermittlung der Fahrsituation (Fzg_S) des Kraftfahrzeugs zumindest einer der folgenden Parameter berücksichtigt werden:
• Fahrmodus
• Lenkradwinkel
• Lenkradwinkelgeschwindigkeit
• Lenkradwinkelbeschleunigung
• Fahrzeuggeschwindigkeit
• Gierwinkelgeschwindigkeit
• Querbeschleunigung
• Längsbeschleunigung
• Radlenkwinkel zumindest eines Rades an zu lenkender Achse

7. Verfahren nach Anspruch 6, **dadurch gekennzeichnet, dass** zur Ermittlung der Fahrsituation (Fzg_S) des Kraftfahrzeugs Signale von zumindest einem, vorzugsweise nicht zur steer-by-wire-Lenkung gehörenden, Steuergerät von der Arbitrierungseinheit berücksichtigt werden, wobei die Signale in Intervallen, insbesondere in Intervallen von 5-40ms, vorzugsweise 10ms eingelesen werden.

8. Verfahren nach einem der vorhergehenden Ansprüche, **dadurch gekennzeichnet, dass** eine Entprellung des Ergebnisses der Überprüfung vorgenommen wird, um eine verlässliche Auswertung der Bedingung G_SLw <= SLw_i oder G_SLw <= SLw_i +v_safe zu erhalten.

9. Verfahren nach einem der vorhergehenden Ansprüche, **dadurch gekennzeichnet, dass** die zumindest eine Lenkfunktion zumindest eine der folgenden Funktionen ist, wobei die Funktionen nicht auf dem Steuergerät der steer-by-wire-Lenkung ausgeführt werden:
• Korridorfunktion
• Parkierfunktion
• Rückfallfunktion
• Fahrerassistenzfunktion

10. Steuergerät zum Ausführen eines Verfahren nach einem der vorhergehenden Ansprüche.

11. Computerprogramm mit Programmcodemitteln, um ein Verfahren nach einem der vorhergehenden Ansprüche von 1 bis 9 auszuführen, wenn das Programm auf einem Computer, insbesondere auf dem Steuergerät nach Anspruch 10 ausgeführt wird.

12. Steer-by-wire-Lenkung mit einem Steuergerät nach Anspruch 10, vorzugsweise ausgebildet als Hinterachslenkung eines Kraftfahrzeugs.

## Claims

1. Method for operating a steer-by-wire steering system of a motor vehicle, wherein at least one steering function requests one or more steering angle changes as target steering angles on at least one vehicle axle, wherein an arbitration unit (AE) weights the steering angle changes as target steering angles (SLw_i) and an overall target steering angle (G_SLw) is determined taking into consideration at least one target steering angle (SLw_i), **characterized in that** a check is carried out continuously, before the overall target steering angle (G_SLw) is set by an actuator of the steer-by-wire steering system, as to whether the following condition is met:
gradient of the overall target steering angle (G_SLw) is less than or equal to the gradient of the at least one target steering angle (SLw_i).

2. Method according to Claim 1, **characterized in that** the request for the steering angle change is made depending on a driving situation (Fzg_S) of the motor vehicle.

3. Method according to Claim 1 or 2, **characterized in that**, before the check, in each case a safety factor (v_safe) is added to the gradients of the target steering angles (SLw_i), the absolute value of which safety factor is variable depending on the vehicle speed, the absolute value of which safety factor in particular becomes smaller as the vehicle speed increases.

4. Method according to Claim 1, 2 or 3, **characterized in that** the check is performed in intervals, in particular in intervals of 1 - 20 ms, preferably every 4 ms.

5. Method according to one of the preceding claims, **characterized in that** the arbitration unit (AE), when determining the overall target steering angle (G_SLw), carries out a cross-fade (B) taking into consideration a first target steering angle (S_Lw1) and at least one further target steering angle (S_Lw2), preferably depending on the driving situation (Fzg_S) of the motor vehicle.

6. Method according to one of the preceding claims, **characterized in that** at least one of the following parameters are taken into consideration to determine the driving situation (Fzg_S) of the motor vehicle:
• driving mode
• steering wheel angle
• steering wheel angular velocity
• steering wheel angular acceleration
• vehicle speed
• yaw angular velocity
• transverse acceleration
• longitudinal acceleration
• wheel steering angle of at least one wheel on axle to be steered

7. Method according to Claim 6, **characterized in that** signals from at least one controller preferably not belonging to the steer-by-wire steering system are taken into consideration by the arbitration unit to determine the driving situation (Fzg_S) of the motor vehicle, wherein the signals are read in in intervals, in particular in intervals of 5 - 40 ms, preferably 10 ms.

8. Method according to one of the preceding claims, **characterized in that** the result of the check is debounced in order to maintain a reliable evaluation of the condition G_SLw <= SLw_i or G_SLw <= SLw_i+v_safe.

9. Method according to one of the preceding claims, **characterized in that** the at least one steering function is at least one of the following functions, wherein the functions are not carried out on the controller of the steer-by-wire steering system:
• corridor function
• parking function
• fallback function
• driver assistance function

10. Controller for carrying out a method according to one of the preceding claims.

11. Computer program comprising program code means for carrying out a method according to one of preceding Claims 1 to 9 when the program is executed on a computer, in particular on the controller according to Claim 10.

12. Steer-by-wire steering system having a controller according to Claim 10, preferably designed as a rear-axle steering system of a motor vehicle.

## Revendications

1. Procédé de fonctionnement du système de direction à commande électrique d'un véhicule automobile, au moins une fonction de direction demandant une ou plusieurs modifications d'angle de braquage comme angle de braquage cible sur au moins un essieu de véhicule, une unité d'arbitrage (AE) pondérant les modifications d'angle de braquage comme angle de braquage cible (SLw_i) et un angle de braquage cible total (G_SLw) étant déterminé avec prise en compte d'au moins un angle de braquage cible (SLw_i), **caractérisé en ce que**, avant de régler l'angle de braquage cible total (G_SLw), une vérification est effectuée en continu par un actionneur du système de direction par commande électrique pour déterminer si la condition suivante est remplie :
la pente de l'angle de braquage cible total (G_SLw) est inférieure ou égale à la pente d'au moins un angle de braquage cible (SLw_i).

2. Procédé selon la revendication 1, **caractérisé en ce que** la demande de modification d'angle de braquage est effectuée en fonction d'une situation de conduite (Fzg_S) du véhicule automobile.

3. Procédé selon la revendication 1 ou 2, **caractérisé en ce qu'**un facteur de sécurité (v_safe), dont la valeur est variable en fonction de la vitesse du véhicule, en particulier dont la valeur diminue à mesure que la vitesse du véhicule augmente, est ajouté aux pentes de l'angle de braquage cible (SLw_i) avant la vérification.

4. Procédé selon la revendication 1, 2 ou 3, **caractérisé en ce que** la vérification est effectuée à intervalles, en particulier à intervalles de 1 à 20 ms, de préférence toutes les 4 ms.

5. Procédé selon l'une des revendications précédentes, **caractérisé en ce que**, lors de la détermination de l'angle de braquage cible total (G_SLw), l'unité d'arbitrage (AE) effectue une transition lissée (B) en prenant en compte un premier angle de braquage cible (S_Lw1) et au moins un autre angle de braquage cible (S_Lw2), de préférence en fonction de la situation de conduite (Fzg_S) du véhicule automobile.

6. Procédé selon l'une des revendications précédentes, **caractérisé en ce qu'**au moins un des paramètres suivants est pris en compte pour déterminer la situation de conduite (Fzg_S) du véhicule automobile :
• Mode de conduite
• Angle du volant
• Vitesse angulaire du volant
• Accélération angulaire du volant
• Vitesse du véhicule
• Vitesse angulaire de lacet
• Accélération latérale
• Accélération longitudinale
• Angle de braquage d'au moins une roue de l'essieu à diriger

7. Procédé selon la revendication 6, **caractérisé en ce que**, pour déterminer la situation de conduite (Fzg_S) du véhicule automobile, des signaux provenant d'au moins un dispositif de commande, de préférence ne faisant pas partie du système de direction à commande électrique, sont pris en compte par l'unité d'arbitrage, les signaux étant lus à intervalles, en particulier à intervalles de 5 à 40 ms, de préférence de 10 ms.

8. Procédé selon l'une des revendications précédentes, **caractérisé en ce qu'**une stabilisation du résultat de la vérification est effectuée afin d'obtenir une évaluation fiable de la condition G_SLw <= SLw_i ou G_SLw <= SLw_i + v_safe.

9. Procédé selon l'une des revendications précédentes, **caractérisé en ce que** l'au moins une fonction de direction est l'une au moins des fonctions suivantes, les fonctions n'étant pas exécutées sur le dispositif de commande du système de direction à commande électrique :
• Fonction couloir
• Fonction de stationnement
• Fonction de recul
• Fonction d'assistance à la conduite

10. Dispositif de commande destiné à la mise en œuvre d'un procédé selon l'une des revendications précédentes.

11. Programme informatique comprenant des moyens de code de programme pour mettre en œuvre un procédé selon l'une des revendications précédentes 1 à 9 lorsque le programme est exécuté sur un ordinateur, notamment sur le dispositif de commande selon la revendication 10.

12. Système de direction à commande électrique comprenant un dispositif de commande selon la revendication 10, de préférence conçu comme une direction d'essieu arrière d'un véhicule automobile.
